# EUROPEAN PATENT APPLICATION

(11) **EP 4 579 887 A1**
(43) Date of publication of application: **02.07.2025**
(21) Application number: 23869990.4
(22) Date of filing: 07.08.2023
(51) Int. Cl.: H01M 50/102, H01M 50/503, H01M 50/284

(54) **BATTERY, BATTERY PACK, AND ELECTRONIC DEVICE**

(30) Priority: 30.09.2022 CN 202222613119 U; 30.09.2022 CN 202222627084 U; 30.09.2022 CN 202222616561 U; 30.09.2022 CN 202222626853 U
(71) Applicant: Zhuhai CosMX Battery Co., Ltd., Zhuhai, Guangdong 519180 (CN)
(72) Inventor: WEI, Zhida, Zhuhai, Guangdong 519180 (CN); XIE, Jichun, Zhuhai, Guangdong 519180 (CN)
(74) Representative: Elzaburu S.L.P.
(86) International application number: PCT/CN2023/111487
(87) International publication number: WO 2024/066744

(57) **Abstract**

A battery, a battery pack, and an electronic device where the battery includes a battery cell, a housing, and a protection plate; the battery cell is arranged in the housing; the housing includes a first side wall, a first groove is provided on the first side wall and at least part of the protection plate is arranged in the first groove; the first side wall is further provided with an electrode terminal, the electrode terminal includes a first electrode terminal and a second electrode terminal, and the first electrode terminal and the second electrode terminal are electrically connected to positive and negative electrodes of the battery cell, respectively. According to the battery, the battery pack, and the electronic device, the overall size of the battery is reduced, and the space is saved.

## Description

This application claims priority to Chinese Patent Applications filed with the China National Intellectual Property Administration on September 30, 2022, with Application No. 202222626853.9, entitled "BATTERY PACK AND ELECTRONIC DEVICE", Application No. 202222616561.7, entitled "BATTERY PACK", Application No. 202222627084.4, entitled "BATTERY AND ELECTRONIC PRODUCTS" and Application No. 202222613119.9, entitled "BATTERY", which are hereby incorporated by reference in their entireties.

### TECHNICAL FIELD

The present application relates to technical field of batteries and, in particular, to a battery, a battery pack, and an electronic device.

### BACKGROUND

Battery is a device that converts chemical energy into electrical energy, and is widely used in life. With the development of the battery industry, enterprises have increasingly high requirements for the production efficiency and qualified rate of batteries.

Existing batteries include a battery cell, housing and protection plate, where the battery cell is set in the housing, the housing acts as the negative terminal of the battery, the protection plate is set outside the battery, the protection plate is connected to the positive and negative electrodes of the battery, and the protection plate is mainly used for battery overcurrent protection, short circuit protection, etc.

However, the protection plate that is set in such a way increases the overall size of the battery.

### SUMMARY

In order to solve at least one of the problems mentioned in the background, the present invention provides a battery, a battery pack and an electronic device, which reduce the overall size of the battery and save space.

In order to realize the above objects, the present invention provides the following technical solution.

In a first aspect, the present invention provides a battery including an battery cell, a housing, and a protection plate, where the battery cell is provided in the housing; the housing includes a first side wall, the first side wall is provided with a first groove, and at least a portion of the protection plate is disposed in the first groove; the first side wall is further provided with an electrode terminal, the electrode terminal includes a first electrode terminal and a second electrode terminal, and the first and second electrode terminals are electrically connected to positive and negative electrodes of the battery cell, respectively.

As an optional embodiment, the housing further includes two opposite second side walls, and the first groove runs through the two second side walls.

As an optional embodiment, the protection plate includes a substrate, an input end, and an output end, where the substrate is set in the first groove, the input end is electrically connected to the first electrode terminal and the second electrode terminal, and the output end is used for connecting with an electronic device.

As an optional embodiment, the first electrode terminal, the second electrode terminal, and the first groove are spaced apart on the first side wall along a width direction of the housing.

As an optional embodiment, the first groove is disposed between the first electrode terminal and the second electrode terminal.

As an optional embodiment, the first groove is located at an end of the first side wall.

As an optional embodiment, the housing further includes a third side wall, the third side wall is perpendicular to both the first side wall and the second side wall, and the first groove extends to the third side wall.

As an optional embodiment, the output end extends from a side of the first groove to and out of a side of the third side wall.

As an optional embodiment, the first groove has a depth of 0.5mm-3mm.

As an optional embodiment, the connection between the first groove and the first side wall is transitioned by a circular arc segment.

As an optional embodiment, a radius of the circular arc is 0.5mm-2.5mm.

As an optional embodiment, an angle between a bottom of the first groove and a side wall of the first groove is greater than or equal to 90°.

As an optional embodiment, the housing is further provided with a second groove, and some of components on the protection plate are located in the second groove.

As an optional embodiment, the second groove is communicated with the first groove.

As an optional embodiment, a projection of the first electrode terminal in a thickness direction of the battery cell at least partially overlaps with the second groove.

As an optional embodiment, the first groove and/or the second groove are provided with a heat dissipation member, and the heat dissipation member is secured to the first groove or the second groove by a thermal conductive adhesive or by welding.

As an optional embodiment, a thermal conductivity of the heat dissipation member is greater than or equal to a thermal conductivity of the housing.

As an optional embodiment, the heat dissipation member is fixed to the housing by a thermal conductive adhesive; or, the heat dissipation member is welded to the housing.

As an optional embodiment, the battery cell includes a battery cell body and a tab connected to the battery cell body, the tab includes a first tab and a second tab, the first tab and the second tab are connected to the first electrode terminal and the second electrode terminal, respectively.

As an optional embodiment, the battery further includes an adapter block, the adapter block is connected to the electrode terminal and the tab, respectively, and a depth of the first groove is less than or equal to a thickness of the adapter block.

As an optional embodiment, a difference between a distance from a groove bottom of the first groove to an outer wall of the housing and the thickness of the adapter blocks is less than or equal to 3 mm.

As an optional embodiment, an insulating layer is provided between the input end and the housing.

As an optional embodiment, a first insulating sheet is provided between the first electrode terminal and the first side wall; at least a portion of a projection of the input end on an end face of the housing is located within the first insulating sheet.

As an optional embodiment, the battery further includes a circuit breaker, the circuit breaker being connected between the input end and the electrode terminal.

As an optional embodiment, an insulating layer is provided between the substrate and the housing.

As an optional embodiment, the substrate, the insulating layer and the first groove are secured to each other by bonding; or, the substrate, the insulating layer and the first groove are secured to each other by welding.

As an optional embodiment, the substrate and the housing are bonded by an adhesive or snap-connected together; or, the substrate and the first groove of the housing are wrapped by an injection molded body.

In a second aspect, the present invention also provides a battery pack including at least two batteries and a protection board, where each battery includes a battery cell, a housing, and an electrode terminal, the battery cell is disposed in the housing, the electrode terminal is electrically connected to a tab of the battery cell, a groove is disposed on a side wall of the housing, and the grooves on adjacent batteries together form an accommodation groove; and
the protection board includes a circuit board body and a connection portion disposed on the circuit board body, the circuit board body being disposed in the accommodation groove, and the connection portion being connected to the electrode terminal.

As an optional embodiment, one end of the groove along its length direction extends to an edge of the side wall.

As an optional embodiment, the housing includes a first side wall, and both the groove and the electrode terminal are located on the first side wall.

As an optional embodiment, the electrode terminal includes a first electrode terminal and a second electrode terminal, and the groove is disposed between the first electrode terminal and the second electrode terminal.

As an optional embodiment, a projection of the electrode terminal in the thickness direction of the battery overlaps at least partially with the groove; or, a projection of the electrode terminal in a width direction of the battery overlaps at least partially with the groove.

As an optional embodiment, the at least two batteries include a first battery and a second battery, the first battery and the second battery being stacked or disposed in parallel.

As an optional embodiment, the groove corresponding to the first battery and the groove corresponding to the second battery are provided side by side to form the accommodation groove together.

As an optional embodiment, the housing further includes two second side walls disposed on opposite sides of the first side wall, and the groove runs through the two second side walls.

As an optional embodiment, the electrode terminal of the first battery and the electrode terminal of the second battery are disposed opposite each other; and the groove corresponding to the first battery and the groove corresponding to the second battery are disposed in parallel to form the accommodation groove together.

As an optional embodiment, an opening of the groove corresponding to the first battery and an opening of the groove corresponding to the second battery are disposed opposite each other to form the accommodation groove together.

As an optional embodiment, the electrode terminal and the groove are spaced apart along a width direction of the first side wall, and the accommodation groove is disposed between the electrode terminal of the first battery and the electrode terminal of the second battery.

As an optional embodiment, both the electrode terminal and the groove are spaced apart along a length direction of the first side wall.

As an optional embodiment, the connection portion includes an input end and an output end, the input end being electrically connected to the electrode terminal, and the output end extending out of the accommodation groove.

As an optional embodiment, a connection between the groove and the first side wall is transitioned by a circular arc segment.

As an optional embodiment, a connection piece is further included, the connection piece being connected between the electrode terminals of two adjacent batteries.

As an optional embodiment, the housing further includes a skirt, an edge of the skirt extending out of the housing.

As an optional embodiment, one end of the protection plate away from the battery cell is lower than one end of the skirt away from the battery cell.

As an optional embodiment, the skirt of the first battery and the skirt of the second battery are adjacent to each other; or
the skirt of the first battery and the skirt of the second battery are located on opposite sides of the battery pack.

As an alternative embodiment, the first battery and the second battery are stacked; the skirt of the first battery and the skirt of the second battery together form an accommodation space, and the connection piece is located in the accommodation space.

As an optional embodiment, an insulating layer is provided between the protection plate and the housing.

As an optional embodiment, a thickness of the insulating layer is not less than a height of the skirt.

As an optional embodiment, one side of the connection portion facing away from the battery is provided with a protrusion, and a gap is provided between the protrusion and the skirt.

As an optional embodiment, a second insulating layer is disposed between the protrusion and the housing.

As an alternative embodiment, gaps between the protection plate, the first battery and the second battery are secured by injection molding or glue dripping.

In a third aspect, the present invention further provides an electronic device including any one of the batteries of the first aspect.

The battery provided by the present invention includes a battery cell, a housing and a protection plate, where the battery cell is arranged in the housing; the housing includes a first side wall, a first groove is provided on the first side wall, and at least a portion of the protection plate is arranged in the first groove; the first side wall is further provided with an electrode terminal including a first electrode terminal and a second electrode terminal, and the first electrode terminal and the second electrode terminal are electrically connected to the positive and negative electrodes of the battery cell, respectively. The battery provided by the present invention may, by providing a first groove on a first side wall of the housing of the battery, allow a part or all of the protection plate provided in the first groove. In this way, the protection plate does not increase the overall size of the battery, saves the space occupied by the battery itself, and improves the cost performance and applicability of the battery.

### BRIEF DESCRIPTION OF DRAWINGS

In order to more clearly illustrate the technical solutions in the embodiments of the present application or in prior art, the drawings to be used in the description of the embodiments or prior art will be briefly introduced below, and it will be obvious that the drawings in the following description are some of the embodiments of the present application, and that for a person of ordinary skill in the art, other accompanying drawings can be obtained based on these drawings without putting in creative labor.
FIG. 1 is a diagram of an overall structure of a first type of battery according to an embodiment of the present invention.
FIG. 2 is a diagram of an overall structure of a second type of battery according to an embodiment of the present invention.
FIG. 3 is a diagram of an overall structure of a third type of battery according to an embodiment of the present invention.
FIG. 4 is a diagram of an overall structure of a fourth type of battery according to an embodiment of the present invention.
FIG. 5 is a diagram of an overall structure of a fifth type of battery according to an embodiment of the present invention.
FIG. 6 is a diagram of an overall structure of a sixth type of battery according to an embodiment of the present invention.
FIG. 7 is a diagram of an overall structure of a seventh type of battery according to an embodiment of the present invention.
FIG. 8 is a diagram of an overall structure of a first type of battery pack according to an embodiment of the present invention.
FIG. 9 is a diagram of an overall structure of a second type of battery pack according to an embodiment of the present invention.
FIG. 10 is a diagram of an overall structure of a third type of battery pack according to an embodiment of the present invention.
FIG. 11 is a diagram of an overall structure of a fourth type of battery pack according to an embodiment of the present invention.
FIG. 12 is a diagram of an overall structure of a fifth type of battery pack according to an embodiment of the present invention.
FIG. 13 is a diagram of an overall structure of a sixth type of battery pack according to an embodiment of the present invention.
FIG. 14 is a diagram of an overall structure of a seventh type of battery pack according to an embodiment of the present invention.
FIG. 15 is a diagram of an overall structure of an eighth type of battery pack according to an embodiment of the present invention.
FIG. 16 is a diagram of an overall structure of a ninth type of battery pack according to an embodiment of the present invention.
FIG. 17 is a diagram of an overall structure of a tenth type of battery pack according to an embodiment of the present invention.
FIG. 18 is a diagram of an overall structure of an eleventh type of battery pack according to an embodiment of the present invention.

### Description of Reference Numbers:

100, battery; 110, battery cell; 120, housing; 121, first side wall; 1211, first groove; 1212, first electrode terminal; 1213, second electrode terminal; 1214, circular arc segment; 1215, second groove; 122, second side wall; 123, third side wall; 124, skirt; 130, protection plate; 131, substrate; 132, input end; 133, output end; 200, battery pack; 210, accommodation groove; 220, connection piece.

### □DESCRIPTION OF EMBODIMENTS

The technical solutions in the embodiments of the present invention will be clearly and completely described below in conjunction with the drawings in the embodiments of the present invention, and it is clear that the embodiments described are only some of the embodiments of the present invention and not all of the embodiments. Based on the embodiments in the present invention, all other embodiments obtained by those skilled in the art without creative work fall within the scope of protection of the present invention.

In the application, the terms "up", "down", "left", "right", "front", "back", "top", "bottom", "inside", "outside", "vertical", "horizontal", "lateral", "longitudinal", and the like, indicate orientation or positional relationships based on the orientation or positional relationships shown in the accompanying drawings. These terms are primarily intended to better describe the present invention and embodiments thereof, and are not intended to limit that an indicated device, element, or component must have a particular orientation, or be constructed and operated in a particular orientation.

Moreover, some of the above terms may be used to mean other meanings in addition to orientation or positional relationships, for example, the term "on" may also be used to mean a certain dependency or connection relationship in some cases. The specific meanings of these terms in the present invention can be understood by those skilled in the art according to the specific circumstances.

In addition, the terms "installed", "disposed", "provided", "connected", "linked" are to be understood in a broad sense. For example, they may be a secured connection, a detachable connection, or a monolithic construction; may be a mechanical connection, or an electrical connection; or they may be directly connected, indirectly connected through an intermediate medium, or internal communication between two devices, elements or components. For those skilled in the art, the specific meanings of the above terms in the present invention can be understood according to the specific circumstances.

Furthermore, the terms "first", "second", etc. are used primarily to distinguish between different devices, elements or components (which may be of the same or different specific types and configurations) and are not intended to indicate or imply the relative importance and number of the indicated devices, elements or components. Unless otherwise specified, "a plurality of" means two or more.

Battery is a device that converts chemical energy into electrical energy. It is widely used in daily life. With the development of the battery industry, enterprises have higher and higher requirements for battery production efficiency and qualified rate. The existing battery includes a battery cell, a housing and a protection plate, where the battery cell is arranged in the housing, the housing acts as a negative terminal of the battery, the protection plate is disposed outside the battery and is connected with the positive and negative electrodes of the battery, and the protection plate mainly provides overcurrent protection, short-circuit protection and the like for the battery. However, setting the protection plate in this way increases the overall size of the battery.

In view of this, the present invention provides a battery including a battery cell, a housing and a protection plate, where the battery cell is arranged in the housing; the housing includes a first side wall, a first groove is provided on the first side wall, and at least a portion of the protection plate is arranged in the first groove; the first side wall is further provided with an electrode terminal, the electrode terminal includes a first electrode terminal and a second electrode terminal, and the first electrode terminal and the second electrode terminal are electrically connected to the positive and negative electrodes of the battery cell, respectively. The battery provided by the present invention may, by providing a first groove on a first side wall of the housing of the battery, allow a part or all of the protection plate to be disposed in the first groove. In this way, the protection plate does not increase the overall size of the battery, saves the space occupied by the battery itself, and improves the cost performance and applicability of the battery.

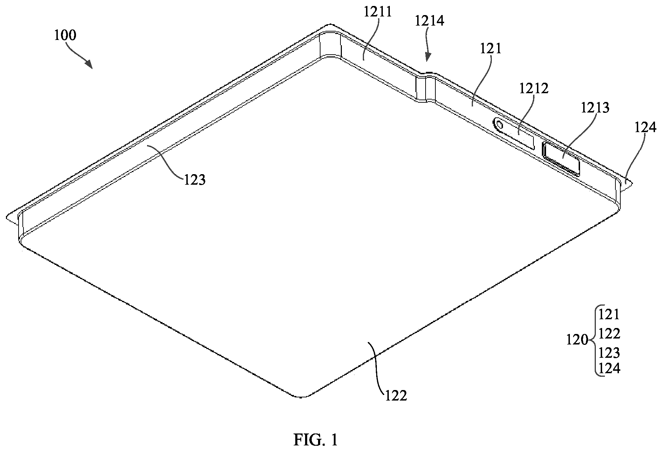

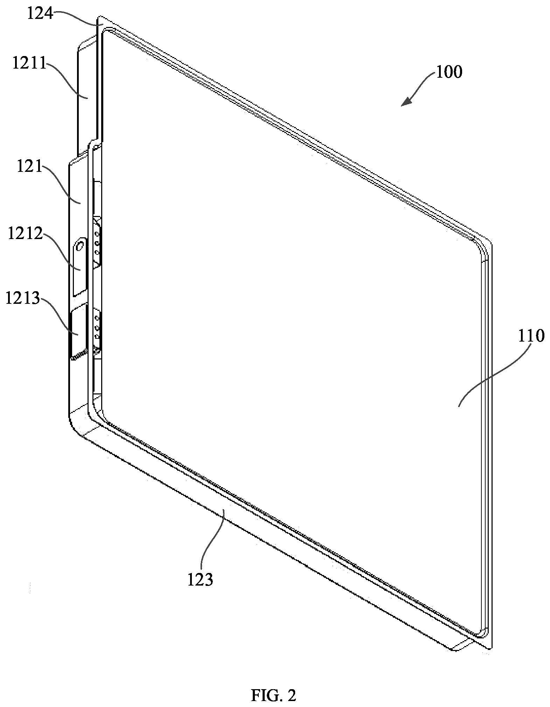

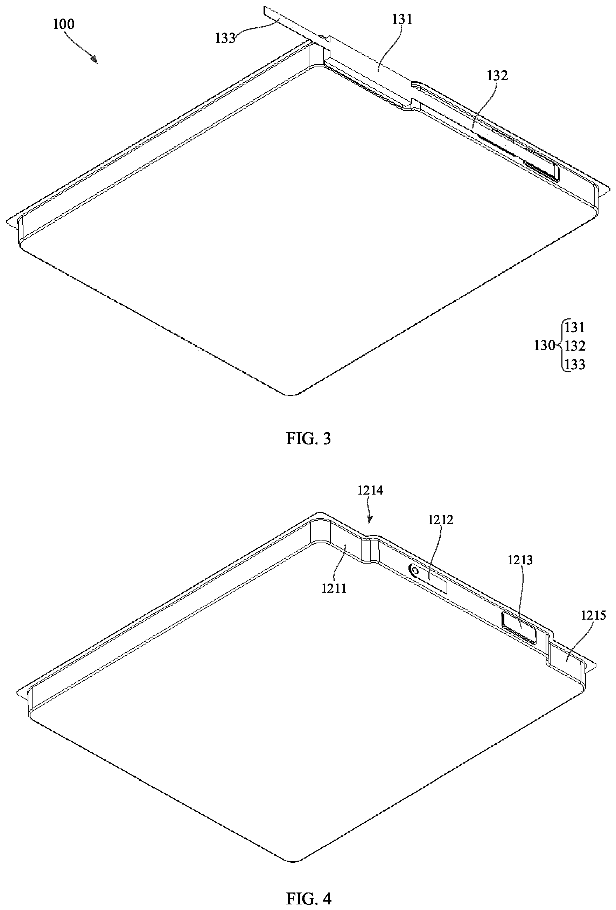

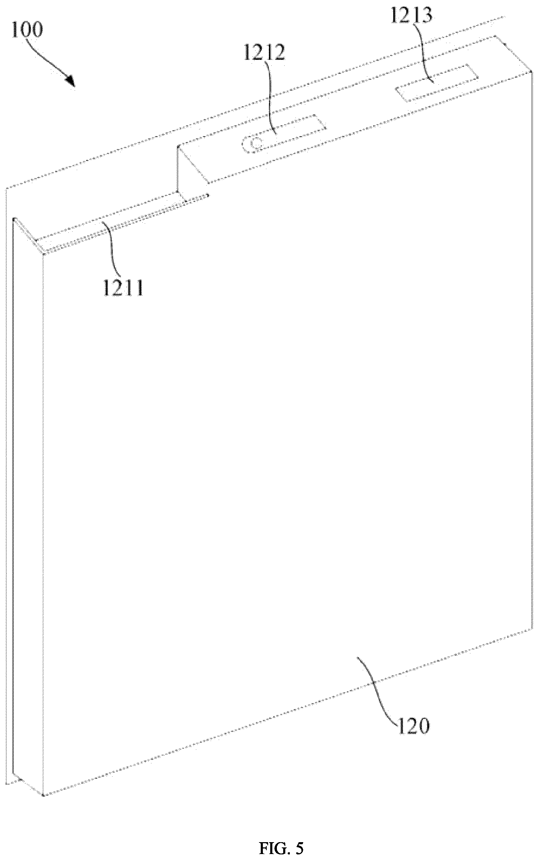

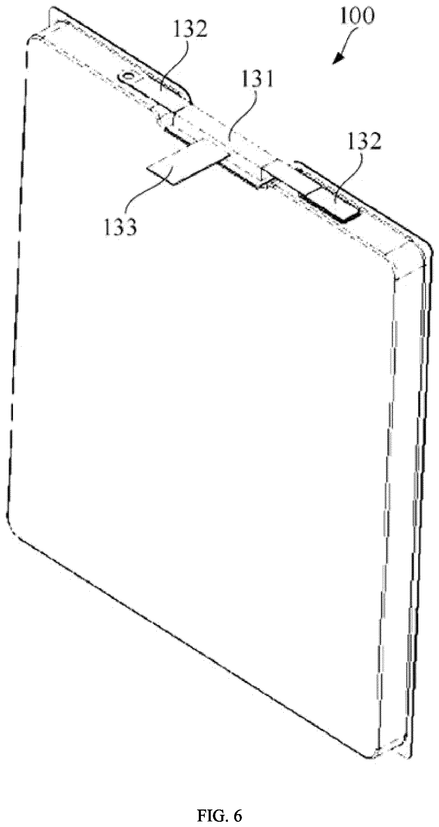

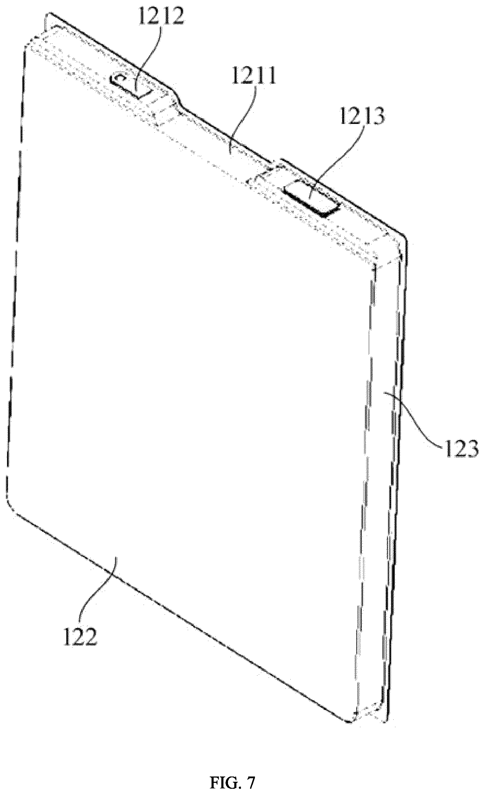

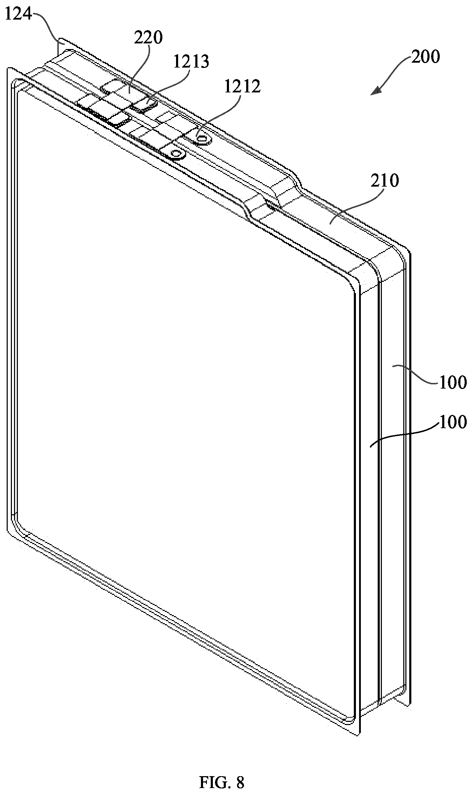

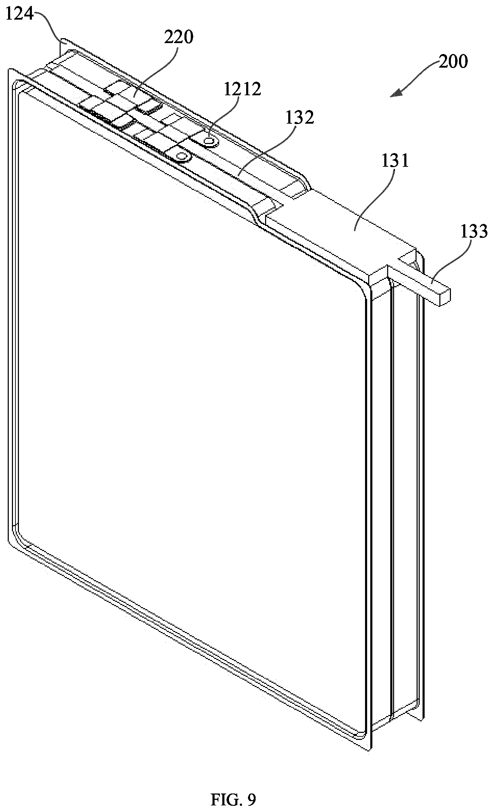

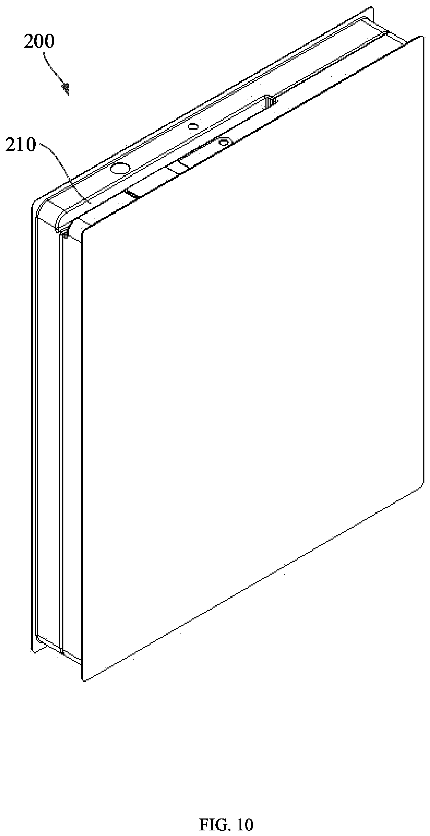

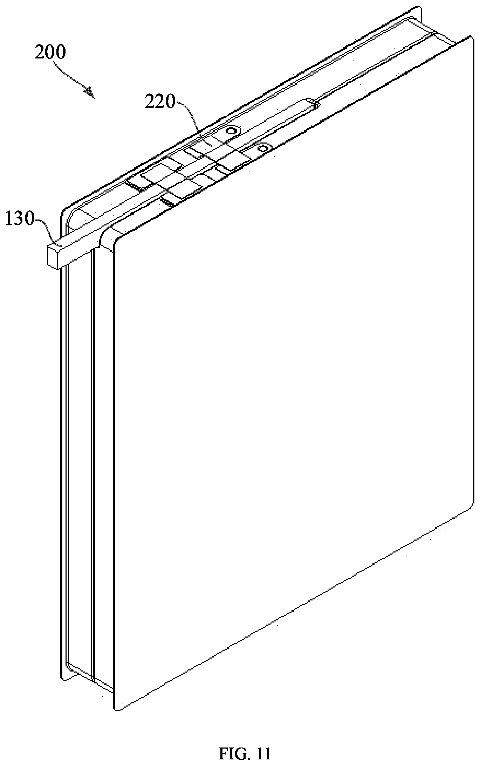

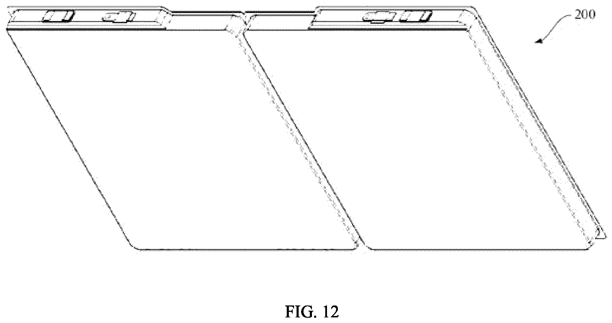

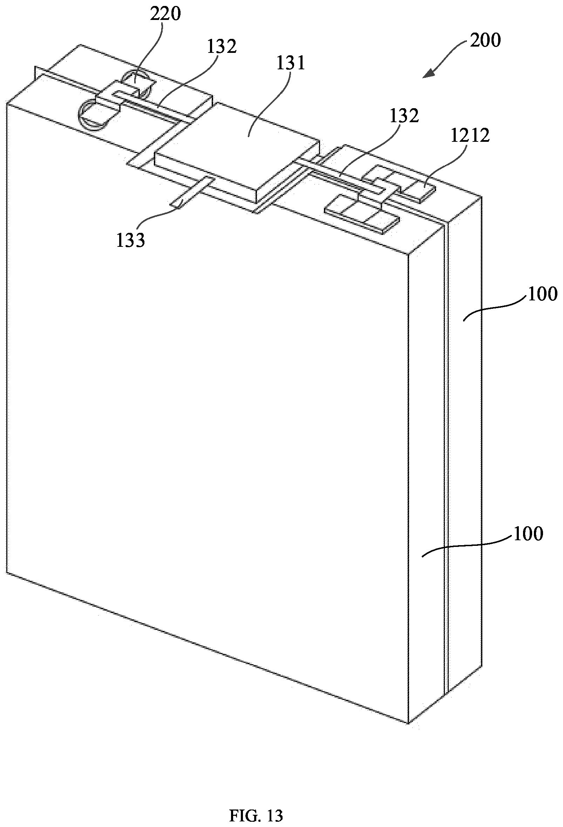

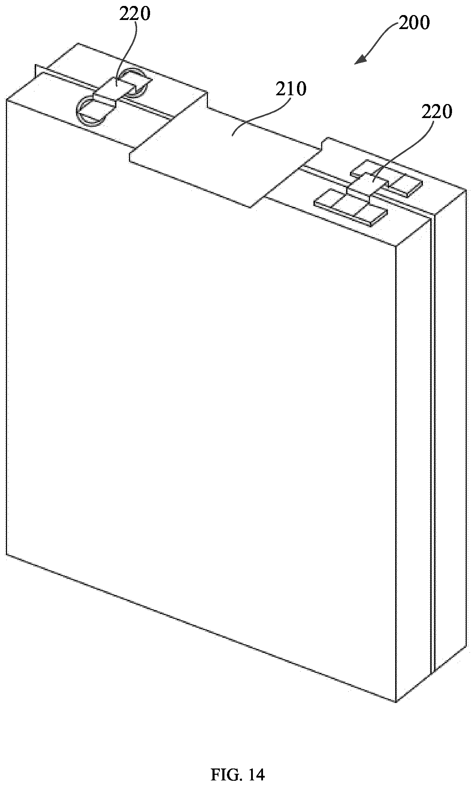

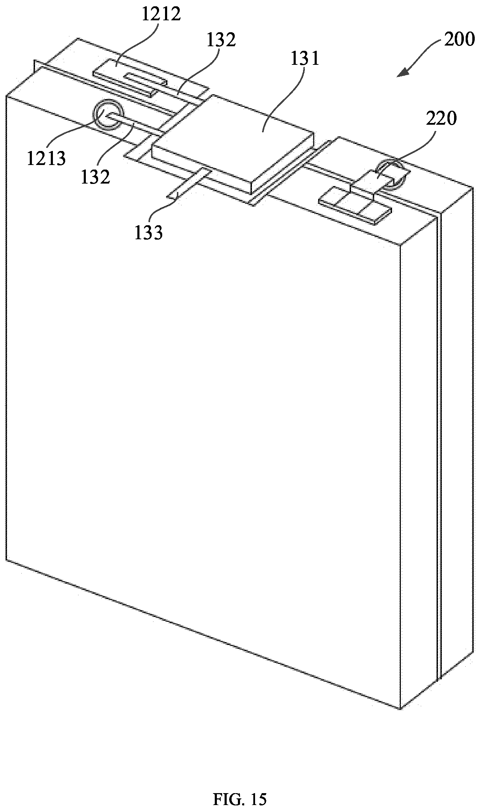

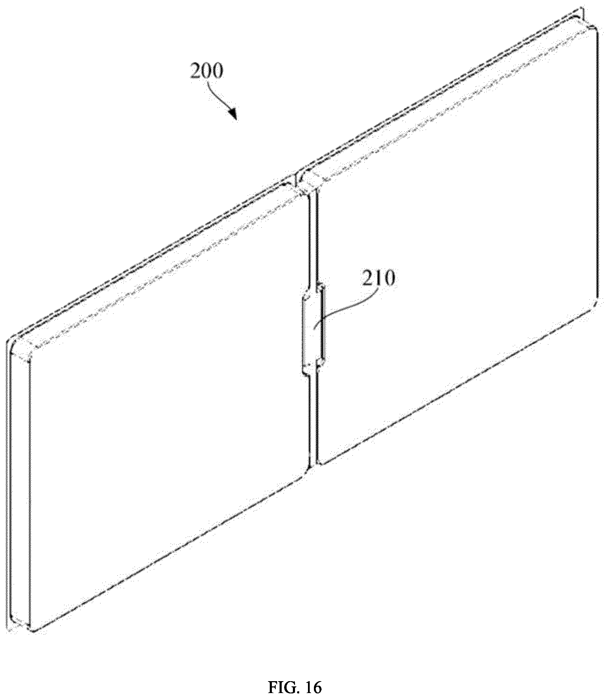

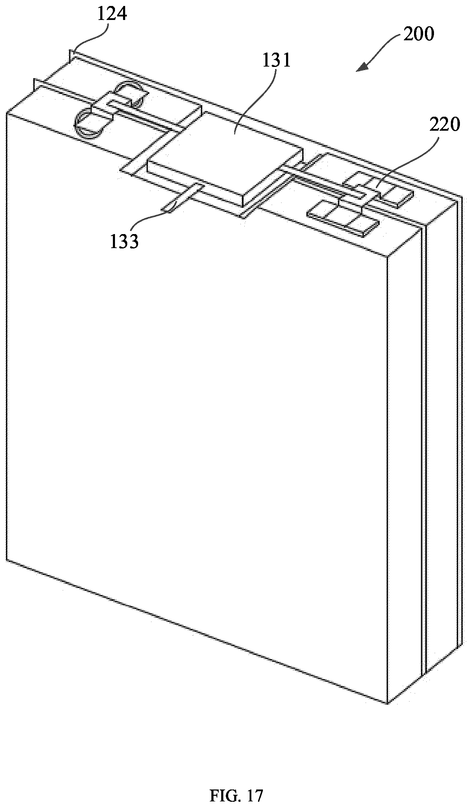

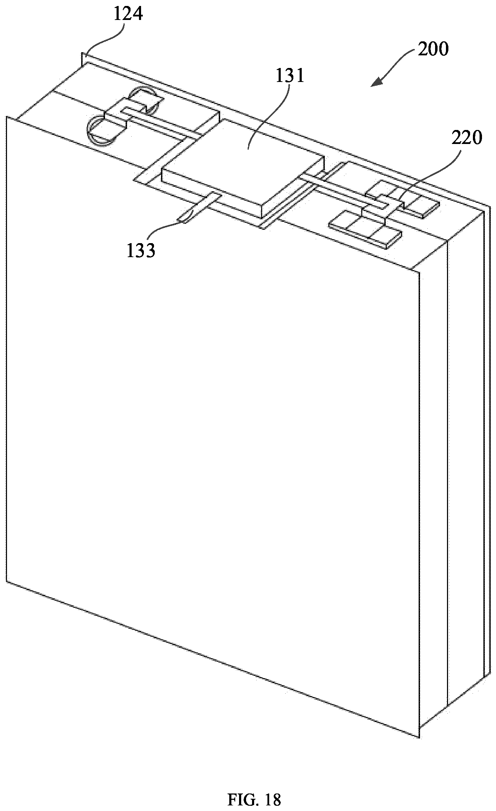

FIG. 1 is a diagram of an overall structure of a first type of battery according to an embodiment of the present invention. FIG. 2 is a diagram of an overall structure of a second type of battery according to an embodiment of the present invention; FIG. 3 is a diagram of an overall structure of a third type of battery according to an embodiment of the present invention; FIG. 4 is a diagram of an overall structure of a fourth type of battery according to an embodiment of the present invention; FIG. 5 is a diagram of an overall structure of a fifth type of battery according to an embodiment of the present invention. FIG. 6 is a diagram of an overall structure of a sixth type of battery according to an embodiment of the present invention; FIG. 7 is a diagram of an overall structure of a seventh type of battery according to an embodiment of the present invention; FIG. 8 is a diagram of an overall structure of a first type of battery pack according to an embodiment of the present invention; FIG. 9 is a diagram of an overall structure of a second type of battery pack according to an embodiment of the present invention; FIG. 10 is a diagram of an overall structure of a third type of battery pack according to an embodiment of the present invention; FIG. 11 is a diagram of an overall structure of a fourth type of battery pack according to an embodiment of the present invention; FIG. 12 is a diagram of an overall structure of a fifth type of battery pack according to an embodiment of the present invention; FIG. 13 is a diagram of an overall structure of a sixth type of battery pack according to an embodiment of the present invention; FIG. 14 is a diagram of an overall structure of a seventh type of battery pack according to an embodiment of the present invention; FIG. 15 is a diagram of an overall structure of an eighth type of battery pack according to an embodiment of the present invention; FIG. 16 is a diagram of an overall structure of a ninth type of battery pack according to an embodiment of the present invention; FIG. 17 is a diagram of an overall structure of a tenth type of battery pack according to an embodiment of the present invention; FIG. 18 is a diagram of an overall structure of an eleventh type of battery pack according to an embodiment of the present invention.

As shown in FIGS. 1 to 18, an embodiment of the present invention provides a battery 100 including a battery cell 110, a housing 120, and a protection plate 130, where the battery cell 110 is disposed in the housing 120; the housing 120 includes a first side wall 121 on which a first groove 1211 is disposed, and at least a portion of the protection plate 130 is disposed in the first groove 1211; the first side wall 121 also has an electrode terminal, the electrode terminal includes a first electrode terminal 1212 and a second electrode terminal 1213 that are electrically connected to the positive and negative electrodes of the battery cell 110, respectively.

Among them, the function of the protection plate 130 is mainly to protect the battery 100 against over-charge, over-discharge, over-current, short circuit, etc. Specifically, for example, when the battery 100 is charged, once the voltage reaches the highest voltage of the battery 100, the protection plate 130 will be automatically powered down and shut down, and charging will stop, and when the battery 100 is about to run out of power, the protection plate 130 will also turn off and discharge will end. For another example, when the battery 100 is discharged, the protection plate 130 generally has a maximum limit current (different instruments generally have different requirements). When the discharge exceeds this limit current, the protection plate 130 will automatically shut down, and when the battery 100 is short circuited due to an accident, the protection plate 130 can automatically shut down in a very short time, so as to no longer be powered on and prevent the battery 100 from burning up and bringing a potential safety hazard.

Among them, the battery cell 110 includes a negative electrode formed by a negative electrode material, a positive electrode formed by a positive electrode material, and a separator separating the positive and negative electrodes; the battery cell 110 may be arranged in a core-wound type, a laminated type, etc., and the present embodiment has no particular limit on this.

It should be noted that the function of the housing 120 is to protect the battery cell 110 therein, and the housing 120 may be formed by two parts spliced together to facilitate installation. The material of the housing 120 may be stainless steel, which is strong and resistant to corrosion. Of course, the housing 120 may also be formed by other material, and this embodiment ha no particular limit on this.

Among them, the shape of the first groove 1211 may be, for example, rectangular, L-shaped, C-shaped, or other polygon-shaped; specifically, the shape of the first groove 1211 may be designed according to the shape of the protection plate 130 so that the two can be better installed and matched, and the present embodiment does not specifically limit this.

In a specific implementation, the protection plate 130 may be provided on the inner wall of the first groove 1211 by welding or bonding; the welding is more secure in connection, and the bonding is simpler in operation and less costly.

The battery 100 provided by the embodiment of the present invention may, by providing the first groove 1211 on the first side wall 121 of the housing 120 of the battery 100, have a part or all of the protection plate 130 provided in the first groove 1211. The protection plate 130 arranged in this way does not increase the overall size of the battery 100, saves the space occupied by the battery 100 itself, and improves the cost performance and applicability of the battery 100.

As shown in FIG. 1, in the above embodiment, the housing 120 may further include two opposite second side walls 122, and the first groove 1211 penetrates the two second side walls 122, so that the protection plate 130 is more convenient to be placed in the first groove 1211, and the disassembly and assembly of the protection plate 130 are more convenient.

As shown in FIGS. 3 and 6, in the above embodiments, the protection plate 130 may include a substrate 131, an input end 132, and an output end 133; the substrate 131 is disposed in the first groove 1211; the input end 132 is electrically connected to both the first electrode terminal 1212 and the second electrode terminal 1213, and the output end 133 is used to be connected to an electronic device.

Among them, the input end 132 and the output end 133 can be designed in the form of a thin sheet to reduce the influence on the volume of the battery 100 as much as possible. It should be understood that the input end 132 generally includes a positive connection end and a negative connection end. In a specific implementation, the input end 132 can be pressed against surfaces of positive and negative terminals of the battery 100; specifically, the positive connection end can be overlapped on a surface of terminal post in the positive terminal of the battery 100, and then the positive connection end can be welded to the terminal post, where the function of the terminal post is mainly to electrically lead the positive electrode of the battery 100 to outside of the housing 120 of the battery 120 for ease of use, and thus, connection of the positive connection end to the terminal post is equivalent to connection to the positive electrode of the battery cell 110. Similarly, the negative connection end can be overlapped on a surface of a reinforcing piece in the negative terminal of the battery 100, and then the negative connection end can be welded to the reinforcing piece, where the main function of the reinforcing piece is to seal and reinforce an injection hole at the negative electrode of the battery 100, the reinforcing piece itself is electrically connected with the housing 120, and the housing 120 is electrically connected with the negative electrode of the battery cell 110. The negative connection end of the protection plate 130 is welded to the reinforcing piece, which may, on one hand, protect the housing 120, and on the other hand, is convenient for disassembly when needed. Specifically, the input end 132 and the output end 133 may be formed by a material having good electrical conductivity, such as copper, aluminum, and the like.

In the above embodiments, the first electrode terminal 1212, the second electrode terminal 1213, and the first groove 1211 may be provided on the first side wall 121 at intervals along a width direction of the housing 120.

In the above embodiments, the first groove 1211 is located between the first electrode terminal 1212 and the second electrode terminal 1213, or the first groove 1211 is located at the end of the first side wall 121.

In the above embodiments, the housing 120 may further include a third side wall 123, the third side wall 123 is perpendicular to both the first side wall 121 and the second side wall 122, the first groove 1211 extends to the third side wall 123. In this way, the processing difficulty of the first groove 1211 can be reduced, and the installation of the protection plate 130 can be facilitated.

In the above embodiments, the output end 133 may extend from a side of the first groove 1211 to and out of a side of the third side wall 123. This arrangement can facilitate the processing of the output end 133 and simplify the structure of the protection plate 130 to a certain extent. Of course, the output end 133 may also extend out from other position of the first groove 1211, and this embodiment does not particularly limit this. Where the first groove 1211 may have a depth of 0.5 mm-3 mm.

In the above embodiments, the connection between the first groove 1211 and the first side wall 121 may be transitioned through a circular arc segment 1214. In this way, the stress concentration at the connection between the first groove 1211 and the first side wall 121 can be reduced, and the strength and reliability of the housing 120 can be improved. Here, a radius of the circular arc may be 0.5 mm-2.5 mm. The transition between groove bottom and side walls of the first groove 1211 can be smooth, which may remove sharp side edges and corners on outer side of the battery 100 to make the battery 100 more safe and reliable in use, and in addition, may also serve as a guide to make the assembly between the housing of the battery 100 and the protection plate 130130 more convenient.

In the above embodiments, an angle between the groove bottom of the first groove 1211 and the side wall of the first groove 1211 is greater than or equal to 90°, so that the protection plate 130 is more easily put into the first groove 1211, and thus the protection plate 130 can work normally.

As shown in FIG. 4, in the above embodiments, the housing 120 may further have a second groove 1215, and some components on the protection plate 130 are located in the second groove 1215. Among them, the provided second groove 1215 can be used to accommodate other related components of the battery 100 to further improve the compactness of the battery 100.

In the above embodiments, the second groove 1215 may be communicated with the first groove 1211. Where a projection of the first electrode terminal 1212 in a thickness direction of the battery cell 110 may at least partially overlap with the second groove 1215. Where a length of the second groove 1215 may be 0.5-3 mm, and a depth of the second groove 1215 may be 0.3-3 mm.

In the above embodiments, the first groove 1211 and the second groove 1215 may be provided with a heat dissipation member, and the heat dissipation member and the first groove 1211 or the second groove 1215 are fixed to each other by a thermal conductive adhesive or welding. Here, the thermal conductivity of the heat dissipation member may be greater than or equal to the thermal conductivity of the housing 120.

In the above embodiments, the battery cell 110 includes a body of the battery cell 110 and a tab connected to the body of the battery cell 110, the tab includes a first tab and a second tab, and the first tab and the second tab are connected to the first electrode terminal 1212 and the second electrode terminal 1213, respectively.

In the above embodiments, the battery 100 further includes an adapter block, and the adapter block is connected to the electrode terminal and the tab, respectively; a depth of the first groove 1211 is less than or equal to a thickness of the adapter block.

In the above embodiments, a difference between a distance between the groove bottom of the first groove 1211 and an outer wall of the housing 120 and the thickness of the adapter block is less than or equal to 3 mm. In this way, it can be ensured that the protection plate 130 is placed in the first groove 1211, so that the protection plate 130 is connected to the internal battery cell 110 and an external electronic device; it can also be ensured that the protection plate 130 does not occupy an excessive space of the battery 100, thereby saving more space for the battery 100, so that the battery cell 110 occupies a larger space, and the capacity of the battery 100 can be improved.

In the above embodiments, an insulating layer may be provided between the input end 132 and the housing 120 to prevent a short circuit between the input end 132 and the housing 120 and affect the normal use of the battery 100.

In the above embodiments, a first insulating sheet may be provided between the first electrode terminal 1212 and the first side wall 121; at least a portion of a projection of the input end 132 on an end face of the housing 120 is positioned within the first insulating sheet to prevent the input end 132 from being connected with the housing.

In the above embodiments, the battery 100 further includes a circuit breaker, and the circuit breaker is connected between the input end 132 and the electrode terminal so that the circuit of the battery 100 is cut off by cutting off the connection between the input end 132 and the electrode terminal when an abnormal state occurs in the battery 100, thereby avoiding danger of the battery 100.

In the above embodiments, an insulating layer is provided between the substrate 131 and the housing 120 to prevent a short circuit between the protection plate 130 and the housing 120.

In the above embodiments, the substrate 131, the insulating layer, and the first groove 1211 are secured to each other by bonding; alternatively, the substrate 131, the insulating layer, and the first groove 1211 are secured to each other by welding.

In the above embodiments, the substrate 131 and the housing 120 are bonded or snap-connected to each other; alternatively, the substrate 131 and the first groove 1211 of the housing 120 are wrapped by an injection molded body.

The battery 100 according to the embodiment of the present invention includes a battery cell 110, a housing 120, and a protection plate 130, and the battery cell 110 is disposed in the housing 120; the housing 120 includes a first side wall 121 on which a first groove 1211 is disposed, and at least a portion of the protection plate 130 is disposed in the first groove 1211; the first side wall 121 further has an electrode terminal including a first electrode terminal 1212 and a second electrode terminal 1213 that are electrically connected to the positive and negative electrodes of the battery cell 110, respectively. The battery 100 provided by the embodiment of the present invention may, by providing the first groove 1211 on the first side wall 121 of the housing 120 of the battery 100, allow a part or all of the protection plate 130 to be disposed in the first groove 1211. In this way, the protection plate 130 does not increase the overall size of the battery 100, saves the space occupied by the battery 100 itself, and improves the cost performance and applicability of the battery 100.

In addition, the present invention also provides a battery pack 200, which includes at least two batteries 100 and a protection plate 130, where each battery 100 includes a battery cell 110, a housing 120, and an electrode terminal; the battery cell 110 is disposed in the housing 120, and the electrode terminal is electrically connected to a tab of the battery cell 110; a side wall of the housing 120 is provided with a groove, and grooves on adjacent batteries 100 jointly form an accommodation groove 210; the protection plate 130 includes a circuit board body disposed in the accommodation groove 210, and a connection portion provided on the circuit board body, and the connection portion is connected to the electrode terminal.

Among them, a material of the circuit board body may be gallium nitride, where gallium nitride, as a new semiconductor material, has characteristics of high thermal conductivity, high temperature resistance, high hardness, high compatibility, good heat dissipation performance, and the like, and the circuit board body formed by gallium nitride can further reduce the size of the substrate 131 without affecting its performance.

In the above embodiments, one end of the groove may extend to the edge of the side wall along a longitudinal direction thereof; alternatively, the housing 120 may include a first side wall 121, both the groove and the electrode terminal are located on the first side wall 121, the electrode terminal includes a first electrode terminal 1212 and a second electrode terminal 1213, and the groove is located between the first electrode terminal 1212 and the second electrode terminal 1213. Where, the fact that both the groove and the electrode terminal are located on the first side wall 121 may enable the circuit board body provided in the groove to be close to the electrode terminal, so as to facilitate the connection between the connection portion and the electrode terminal, and at the same time, the cost of material can be saved. Since the groove is located between the first electrode terminal 1212 and the second electrode terminal 1213, after the protection plate 130 is placed in the groove, the connection distances from the protection plate 130 to the first electrode terminal 1212 and to the second electrode terminal 1213 may be the same, so that the connection of the protection plate 130 to the first electrode terminal 1212 and to the second electrode terminal 1213 can be facilitated, and a connection error is not easy to occur, and thus a short circuit after the protection plate 130 is connected with the first electrode terminal 1212 and the second electrode terminal 1213 can be avoided.

In the above embodiments, a projection of the electrode terminal in the thickness direction of the battery 100 may at least partially overlap with the groove; alternatively, a projection of the electrode terminal in the width direction of the battery 100 may at least partially overlap with the groove.

In the above embodiments, the at least two batteries 100 may include a first battery 100 and a second battery 100, and the first battery 100 and the second battery 100 may be stacked or disposed in parallel.

In the above embodiments, the groove corresponding to the first battery 100 and the groove corresponding to the second battery 100 may be arranged in parallel to form the accommodation groove 210 together.

In the above embodiments, the groove is located on a side wall of the housing 120 provided with the electrode terminal, and an opening of the groove faces a side of the side wall provided with the electrode terminal, so that when the protection plate 130 is placed, the circuit board body is directly placed in the groove through the opening of the groove, which facilitates the installation of the circuit board body and the battery 100, and the connection portion can be directly connected with the electrode terminal through the opening, so that the connection between the connection portion and the electrode terminal is more convenient.

In the above embodiments, the housing 120 may further include second side walls 122 located on opposite sides of the first side wall 121, and the groove penetrate the two second side walls 122, so that the protection plate 130 is more convenient to be placed in the groove, and the disassembly of the protection plate 130 is more convenient. At the same time, when the electrode terminal is connected to an external electronic device, it is ensured that the electrode terminal is not hindered by the housing 120, and the connection is more reliable.

In the above embodiments, the electrode terminal of the first battery 100 and the electrode terminal of the second battery 100 may be disposed opposite each other, and the groove corresponding to the first battery 100 and the groove corresponding to the second battery 100 are arranged in parallel to form the accommodation groove 210 together.

In the above embodiments, the opening of the groove corresponding to the first battery 100 and the opening of the groove corresponding to the second battery 100 are opposite each other to form the accommodation groove 210 together. The fact that the opening of the groove corresponding to the first battery 100 and the opening of the groove corresponding to the second battery 100 are opposite each other to form the accommodation groove 210 together may, on one hand, avoid the space waste caused by the misalignment of the openings of the groove, and thus reduce the space occupied by the protection plate 130, so that the first battery 100 and the second battery 100 occupy a larger space; on the other hand, the fact that the openings of the grooves of the first battery 100 and the second battery 100 are opposite each other may enable the protection plate 130 to be completely placed in the openings of the grooves of the first battery 100 and the second battery 100 when the protection plate 130 is placed, so that the installation and connection of the protection plate 130 and the battery pack 200 are more convenient and stable.

In the above embodiments, the electrode terminal and the groove may be provided at intervals along the width direction of the first side wall 121, and the accommodation groove 210 may be located between the electrode terminal of the first battery 100 and the electrode terminal of the second battery 100.

In the above embodiments, both the electrode terminal and the groove may be provided at intervals along the length direction of the first side wall 121.

In the above embodiments, the connection portion may include an input end 132 and an output end 133, the input end 132 is electrically connected to the electrode terminal, and the output end 133 extends out of the accommodation groove 210. Where, the extended-out output end 133 can be conveniently electrically connected to an external electronic device to power the electronic device. Where, the input end 132 and the output end 133 may use a material with good conductivity, such as copper and aluminum.

In the above embodiments, a connection between the groove and the first side wall 121 may be transitioned through a circular arc segment 1214. In this way, the stress concentration at the connection between the groove and the first side wall 121 can be reduced, and the strength and reliability of the housing 120 can be improved.

As shown in FIGS. 8, 9, and 11-18, in the above embodiments, a connection piece 220 may be further included, and the connection piece 220 is connected between the electrode terminals of two adjacent batteries 100.

In the above embodiments, the housing 120 may further include a skirt 124, and an edge of the skirt 124 extends out of the housing 120.

In the above embodiments, one end of the protection plate 130 away from the battery cell 110 may be lower than one end of the skirt 124 away from the battery cell 110, so that the protection plate 130 provided will not increase the overall size of the battery 100.

In the above embodiments, the skirt 124 of the first battery 100 and the skirt 124 of the second battery 100 may be adjacent to each other; alternatively, the skirt 124 of the first battery 100 and the skirt 124 of the second battery 100 are positioned on opposite sides of the battery pack 200.

In the above embodiments, the first battery 100 and the second battery 100 may be stacked so that the skirt 124 of the first battery 100 and the skirt 124 of the second battery 100 together form an accommodation space, and the connection piece 220 is positioned in the accommodation space.

In the above embodiments, an insulating layer may be provided between the protection plate 130 and the housing 120. A specific material of the insulating layer may be resin, plastic, and the like. A main function of the insulating layer is to maintain insulation between the circuit board body and the housing 120. It should be understood that the housing 120 of the battery 100 generally serves as the negative electrode of the battery 100, and the protection plate 130 itself has been connected to an electrode terminal of the battery 100 through the connection portion, so the insulating layer can prevent other parts of the protection plate 130 from coming into electrical contact with the housing 120 again, so as not to affect the performance of the protection plate 130.

In the above embodiments, a thickness of the insulating layer may be not less than a height of the skirt 124, thereby avoiding a short circuit between the protection plate 130 and the skirt 124.

In the above embodiments, a protrusion may be provided on one side of the connection portion away from the battery 100, a gap is left between the protrusion and the skirt 124, and a second insulating layer may be provided between the protrusion and the housing 120 to avoid a short circuit of the protrusion and the skirt 124.

In the above embodiments, gaps between the protection plate 130, the first battery 100, and the second battery 100 may be secured by injection molding or glue dropping.

In addition, the present invention also provides an electronic device including the battery 100 according to any one of the above embodiments.

Finally, it should be noted that the above embodiments are merely used to illustrate the technical solutions of the present invention, and are not intended to limit them. Although the present invention has been described in detail with reference to the above-described embodiments, those skilled in the art should understand that the technical solutions described in the above embodiments can still be modified, or some or all of the technical features therein can be equivalently replaced. These modifications or replacements do not cause the essence of the corresponding technical solutions to deviate from the scope of the technical solutions of the embodiments of the present invention.

## Claims

1. A battery comprising a battery cell, a housing, and a protection plate, wherein the battery cell is disposed in the housing; the housing comprises a first side wall provided with a first groove, at least a portion of the protection plate is disposed in the first groove; the first side wall is further provided with an electrode terminal, the electrode terminal comprises a first electrode terminal and a second electrode terminal that are electrically connected to positive and negative electrodes of the battery cell, respectively.

2. The battery according to claim 1, wherein the housing further comprises two opposite second side walls, the first groove runs through the two second side walls.

3. The battery according to claim 2, wherein the protection plate comprises a substrate, an input end, and an output end, wherein the substrate is disposed in the first groove, the input end is electrically connected with both the first electrode terminal and the second electrode terminal, and the output end is used for connecting with an electronic device.

4. The battery according to claim 3, wherein the first electrode terminal, the second electrode terminal, and the first groove are disposed on the first side wall at intervals in a width direction of the housing.

5. The battery according to claim 3, wherein the first groove is located between the first electrode terminal and the second electrode terminal.

6. The battery according to claim 3, wherein the first groove is located at an end of the first side wall.

7. The battery according to claim 6, wherein the housing further comprises a third side wall, the third side wall is perpendicular to both the first side wall and the second side wall, and the first groove extends to the third side wall.

8. The battery according to claim 7, wherein the output end extends from a side of the first groove to and out of a side of the third side wall.

9. The battery according to any one of claims 1-8, wherein a depth of the first groove is 0.5 mm-3 mm.

10. The battery according to claim 9, wherein a connection between the first groove and the first side wall is transitioned by a circular arc segment.

11. The battery according to claim 10, wherein a radius of the circular arc is 0.5 mm-2. 5 mm.

12. The battery according to claim 11, wherein an angle between a groove bottom of the first groove and a side wall of the first groove is greater than or equal to 90 °.

13. The battery according to claim 12, wherein the housing is further provided with a second groove, a plurality of components on the protection plate are placed in the second groove.

14. The battery according to claim 13, wherein the second groove is communicated with the first groove.

15. The battery according to claim 14, wherein a projection of the first electrode terminal in a thickness direction of the battery cell at least partially overlaps with the second groove.

16. The battery according to claim 15, wherein the first groove and/or the second groove is provided with a heat dissipation member, the heat dissipation member is secured to the first groove or the second groove by a thermal conductive adhesive or by welding.

17. The battery according to claim 16, wherein a thermal conductivity of the heat dissipation member is greater than or equal to a thermal conductivity of the housing.

18. The battery according to claim 17, wherein the heat dissipation member is secured to the housing by a thermal conductive adhesive; or, the heat dissipation member is welded to the housing.

19. The battery according to any one of claims 1-8, wherein the battery cell comprises a battery cell body and a tab connected to the battery cell body, the tab comprises a first tab and a second tab, and the first tab and the second tab are connected to the first electrode terminal and the second electrode terminal, respectively.

20. The battery according to claim 19, wherein the battery further comprises an adapter block, the adapter block is connected to the electrode terminal and the tab, respectively; and a depth of the first groove is less than or equal to a thickness of the adapter block.

21. The battery according to claim 20, wherein a difference between a distance between a groove bottom of the first groove and an outer wall of the housing and the thickness of the adapter block is less than or equal to 3 mm.

22. The battery according to any one of claims 3-8, wherein an insulating layer is disposed between the input end and the housing.

23. The battery according to any one of claims 3-8, wherein a first insulating sheet is disposed between the first electrode terminal and the first side wall, and at least a portion of a projection of the input end on an end face of the housing is located within the first insulating sheet.

24. The battery according to any one of claims 3-8, further comprising a circuit breaker connected between the input end and the electrode terminal.

25. The battery according to any one of claims 3-8, wherein an insulating layer is disposed between the substrate and the housing.

26. The battery according to claim 25, wherein the substrate, the insulating layer, and the first groove are secured to each other by bonding; or, the substrate, the insulating layer, and the first groove are secured to each other by welding.

27. The battery according to claim 26, wherein the substrate and the housing are bonded by an adhesive or snap-connected together; or, the substrate and the first groove of the housing are wrapped by an injection molded body.

28. A battery pack, comprising at least two batteries and a protection plate, wherein each battery comprises a battery cell, a housing, and an electrode terminal, the battery cell is disposed within the housing, the electrode terminal is electrically connected to a tab of the battery cell; a side wall of the housing is provided with a groove, and the grooves of adjacent batteries jointly form an accommodation groove;
the protection plate comprises a circuit board body and a connection portion provided on the circuit board body, the circuit board body is provided in the accommodation groove, and the connection portion is connected to the electrode terminal.

29. The battery pack according to claim 28, wherein one end of the groove along its length direction extends to an edge of the side wall.

30. The battery pack according to claim 28, wherein the housing comprises a first side wall, both the groove and the electrode terminal are located on the first side wall.

31. The battery pack according to claim 30, wherein the electrode terminal comprises a first electrode terminal and a second electrode terminal, and the groove is located between the first electrode terminal and the second electrode terminal.

32. The battery pack according to claim 30, wherein a projection of the electrode terminal in a thickness direction of the battery at least partially overlaps with the groove; or, a projection of the electrode terminal in a width direction of the battery at least partially overlaps with the groove.

33. The battery pack according to claim 30, wherein the at least two batteries comprise a first battery and a second battery, the first battery and the second battery being stacked or disposed in parallel.

34. The battery pack according to claim 33, wherein the groove corresponding to the first battery and the groove corresponding to the second battery are provided side by side to together form the accommodation groove.

35. The battery pack according to claim 30, wherein the housing further comprises two second side walls on opposite sides of the first side wall, the groove runs through the two second side walls.

36. The battery pack according to claim 33, wherein the electrode terminal of the first battery and the electrode terminal of the second battery are provided opposite each other; the groove corresponding to the first battery and the groove corresponding to the second battery are provided side by side to form the accommodation groove together.

37. The battery pack according to claim 33, wherein an opening of the groove corresponding to the first battery and an opening of the groove corresponding to the second battery are disposed opposite each other to collectively form the accommodation groove.

38. The battery pack according to claim 33, wherein the electrode terminal and the groove are disposed at intervals along a width direction of the first side wall, and the accommodation groove is located between the electrode terminal of the first battery and the electrode terminal of the second battery.

39. The battery pack according to claim 32, wherein the electrode terminal and the groove are each disposed at intervals along a length direction of the first side wall.

40. The battery pack according to any one of claims 28-39, wherein the connection portion comprises an input end and an output end, the input end is electrically connected to the electrode terminal and the output end extends out of the accommodation groove.

41. The battery pack according to any one of claims 30-39, wherein a connection of the groove and the first side wall is transitioned by a circular arc segment.

42. The battery pack according to any one of claims 28-38, further comprising a connection piece connected between electrode terminals of two adjacent batteries.

43. The battery pack according to claim 33, wherein the housing further comprises a skirt, an edge of the skirt extending out of the housing.

44. The battery pack according to claim 43, wherein an end of the protection plate away from the battery cell is lower than an end of the skirt away from the battery cell.

45. The battery pack according to claim 43, wherein the skirt of the first battery and the skirt of the second battery are adjacent to each other;
or, the skirt of the first battery and the skirt of the second battery are located on opposite sides of the battery pack.

46. The battery pack according to claim 44, wherein the first battery and the second battery are stacked, and the skirt of the first battery and the skirt of the second battery together form an accommodation space, and the connection piece is located in the accommodation space.

47. The battery pack according to claim 43, wherein an insulating layer is disposed between the protection plate and the housing.

48. The battery pack according to claim 47, wherein a thickness of the insulating layer is not less than a height of the skirt.

49. The battery pack according to claim 43, wherein a side of the connection portion facing away from the battery is provided with a protrusion, and there is a gap between the protrusion and the skirt.

50. The battery pack according to claim 49, wherein a second insulating layer is provided between the protrusion and the housing.

51. The battery pack according to claim 33, wherein gaps between the protection plate, the first battery and the second battery is secured by injection molding or glue dropping.

52. An electronic device, comprising the battery according to any one of claims 1-27.
